# EUROPÄISCHE PATENTANMELDUNG

(11) **EP 1 120 734 A2**
(43) Veröffentlichungstag der Anmeldung: **01.08.2001**
(21) Anmeldenummer: 01100552.7
(22) Anmeldetag: 10.01.2001
(51) Int. Cl.: G06K 7/00

(54) **Integrierte Schaltungsanordnung zur NF-Signalgewinnung bei kontaktloser Datenübertragung**

(30) Priorität: 21.01.2000 DE 10002501
(71) Anmelder: ATMEL Germany GmbH, 74072 Heilbronn (DE)
(72) Erfinder: Hanselmann, Dieter, 74613 Öhringen (DE)
(74) Vertreter: Kolb, Georg

(57) **Zusammenfassung**

1. Integrierte Schaltungsanordnung zur NF -.Signalgewinnung bei kontaktloser Datenübertragung

2.1 Bekannte schaltungsanordnungen zur NF Signalgewinnung, lassen nur einen geringen Kommunikationsabstand zwischen Transponder und Basiseinheit zu und bestehen aus mehreren ICs die zusammengefügt werden müssen.

2.2 Durch bipolare oder MOS Schaltungsanordnungen, bei denen die NF - Signalgewinnung für den AM - Demodulator an mindestens einer der beiden Schaltungszweigen der H-Brücke erfolgt. Dadurch erhöht sich die Systemempfindlichkeit und damit der Kommunikationsabstand zwischen Transponder und Basiseinheit. Durch die reduzierten Anforderungen an die Spannungsfestigkeit des AM-Demodulator, läßt sich dieser Schaltungsteil leicht mit der H-Brücke gemeinsam in einem IC integrieren.

## Beschreibung

Die vorliegende Erfindung betrifft eine integrierte Schaltungsanordnung zur NF - Signalgewinnung bei Transpondern, gemäß dem Oberbegriff des Patentanspruchs 1

Kontaktlose Idendifikationssysteme bestehen aus einem Transponder (Datenträger) und einer Basisstadion (Schreib/Leseeinheit). Die Kommunikation zwischen Transponder und Basiseinheit erfolgt über ein von der Basiseinheit mittels eines seriellen Schwingkreises ausgesandten Hochfrequenzfeldes (Trägersignal). Da der Transponder keine eigene Energieversorgung besitzt, muß die dafür nötige Energie über eine Empfängerspule aus dem Hochfrequenzfeld entnommen werden. Sobald die vom Transponder aufgenommene Energie für eine zuverlässige Kommunikation ausreicht, sendet dieser ein niederfrequentes Datensignal, das mittels AM-Modulation auf das empfangene Trägersignal aufmoduliert wurde, über seine Empfängerspule an die Basiseinheit zurück, In der Basiseinheit wird das in der Sendespule induzierte Signal für die Rückgewinnung des niederfrequenten Datensignals mittels eines AM-Demodulators von dem Trägersignal getrennt und zur weiteren Verarbeitung einer Logikeinheit zur Verfügung gestellt. Da die induktive Kopplung zwischen den Spulen des Transponders und der Basiseinheit, bedingt durch die niedrige Permeabilitätskonstante der Luft, klein ist, darf die Entfernung zwischen Transponder und Basiseinheit im allgemeinen nur wenige cm betragen. Um durch das Hochfrequenzfeld genügend Energie von der Basiseinheit zum Transponder zu übertragen, muß die Amplitude des Trägersignals am seriellen Schwingkreis der Basiseinheit im Bereich von 100V liegen. Dabei wird der serielle Schwingkreis durch die beiden Schaltungszweige einer H-Brücke mit seiner Eigenfrequenz erregt. Durch die geringe Kopplung ist auch der AM-Modulationshub, den der Transponder in dem seriellen Schwingkreis der Basiseinheit verursacht, nur im Bereich von einem Volt. Zur Erhöhung der Reichweite als auch für eine sichere Datenübertragung zwischen Transponder und Basiseinheit sind Lösungen zu suchen, die die Systemempfindlichkeit steigern. Da es sich um einen Produktbereich mit sehr hohen Stückzahlen handelt, ist es besonders wichtig, alle Systemfunktionen in eine Schaltungsanordnung kostengünstig zu integrieren.

Aus dem Datenbuch TEMIC Semiconductor 1997 S.352 und S.353 sind Schaltungsanordnungen bekannt, bei denen die Auskopplung des modulierten Trägersignals zwischen Spule und Kondensator des seriellen Schwingkreises erfolgt. Da beide Bezugspunkte des seriellen Schwingkreises mit der Frequenz des Trägers zwischen Masse und Versorgungspotential wechseln, ist dem Trägersignal ein weiteres Signal mit der Amplitude der Versorgungsspannung (5V) überlagert. Um das Datensignal vom Träger abzutrennen, wird das modulierte Signal, dessen Amplitude etwa 100V beträgt, einem externen AM-Demodulators zur Verfügung gestellt. Je nach Spannungsfestigkeit des AM-Demodulator muß das modulierte Trägersignal über einen zusätzlichen Spannungsteiler angepaßt werden. Nach der Demodulation wird das abgetrennte Datensignal dem Ansteuer-IC der Basiseinheit zur weiteren Verarbeitung wieder zur Verfügung gestellt

Bei dieser bekannten Lösung ist die Systemempfindlichkeit und damit die Reichweite für eine sichere Datenübertragung zwischen Transponder und Basiseinheit gering, da der Modulationshub durch den Spannungsteiler verringert wird und dem Trägersignal ein Störsignal in Höhe der Betriebsspannung überlagert ist. Zusätzlich kann bei dieser Art der Auskopplung nur eine Hälfte (die positive Amplitude) des modulierten Trägersignals ausgewertet werden. Weiterhin ist es bisher wegen den zu hohen Kosten führenden extremen Anforderungen an die Spannungsfestigkeit nicht möglich, die Demodulatorschaltung mit in den integrierten Schaltkreis (IC) der Ansteuerschaltung zu integrieren.

Aufgabe der vorliegenden Erfindung ist es, eine monolythisch integrierbare Schaltungsanordnung anzugeben, die durch eine erhöhte Systemempfindlichkeit die Reichweite vergrößert, bei der ein Datenaustausch zwischen Transponder und Basiseinheit erfolgen kann und sich dabei die AM-Demodulatorschaltung kostengünstig mit der Erregerschaltung integrieren läßt.

Diese Aufgabe wird erfindungsgemäß durch eine integrierte Schaltungsanordnung zur NF-Signalgewinnung gemäß den Merkmalen des Patentanspruches 1 gelöst. Günstige Ausgestaltungsformen sind Gegenstand von Unteransprüchen.

Untersuchungen der Anmelderin haben gezeigt, daß sich die Systemempfindlichkeit der Anordnung "Transponder Basiseinheit" wesentlich erhöht, wenn die Auskoppelung des modulierten Trägersignals zur NF-Signalgewinnung mittels eines AM-Demodulators, an den beiden Schaltungszweige der H-Brücke der Basiseinheit erfolgt, die den seriellen Schwingkreises erregen. Da die Spannungsamplitude in den beiden Schaltungszweige der H-Brücke nur zwischen Massepotential und der Betriebsspannung wechseln kann, entfällt der Spannungsteiler am Eingang des AM-Demodulators, da eine Eingangsspannungsfestigkeit des AM-Demodulators in Höhe der Versorgungsspannung ausreicht. Bis auf die Sendespule der Basiseinheit, können damit alle Schaltungsteile in einem einzigen IC einer niedrigsperrenden und hochintegrationsfähigen Technologie ausgeführt werden. Damit läßt sich die Basiseinheit sehr flächensparend und kostengünstig aufbauen. Des weiteren ist bei der erfindungsgemäßen Schaltungsanordnung eine Ausführung in einer Bipolar als auch in einer CMOS Technologie möglich.

Nachfolgend wird die Erfindung anhand den Zeichnungen Figur 1 bis Figur 4 dargestellt und erläutert. Es zeigen:
- Fig. 1: Eine erstes Ausführungsbeispiel der Erfindung als Schaltungsanordnung mit Bipolar-Transistoren,
- Fig. 2: Ein weiteres Ausführungsbeispiel der Erfindung, bei der MOS Transistoren verwendet werden,
- Fig. 3: Eine weitere Schaltungsanordnung gemäß der Erfindung, bei der die Signalauskoppelung direkt an Eingängen des seriellen Schwingkreises erfolgt, und,
- Fig. 4: Ein letztes Ausführungsbeispiel der Erfindung basierend auf der schaltungsanordnung nach Fig. 3.

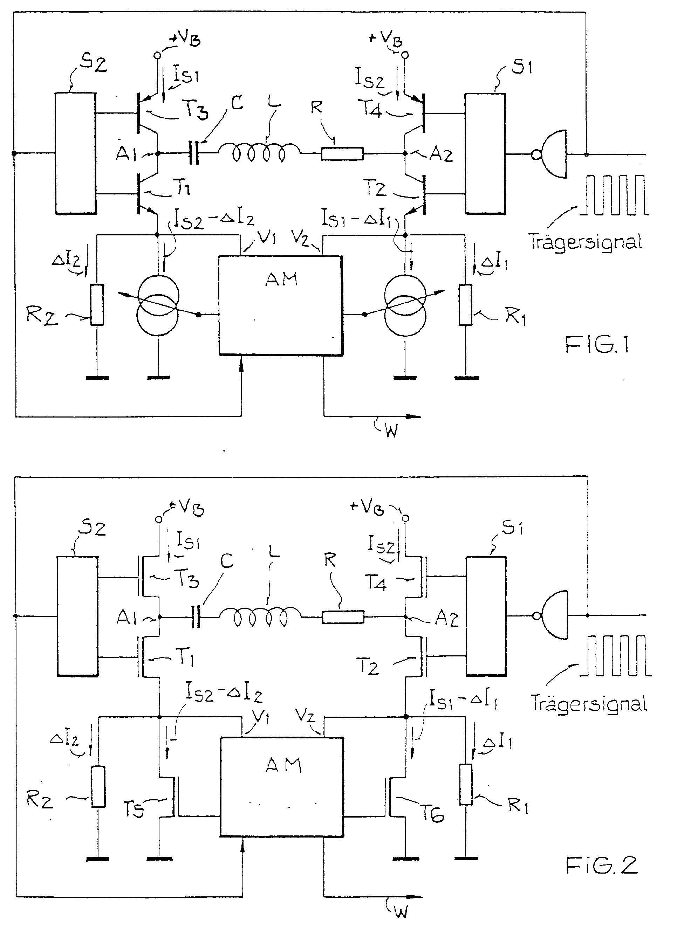

In den oben genannten Abbildungen ist jeweils nur der Teil der Basiseinheit dargestellt, auf den sich die Erfindung bezieht. In Figur 1 ist ein erstes Ausführungsbeispiel der erfindungsgemäßen Schaltungsanordnung dargestellt, bei der ein AM-Demodulator AM mit integriert werden kann. Hierbei wird ein serieller Schwingkreis L und R über zwei Ausgänge A1, A2 von zwei Schaltungszweigen T1, T4 und T3, T2 einer H-Brücke erregt. Die beiden Schaltungszweige der H-Brücke werden von einer ersten Ansteuerschaltung S1, der ein invertiertes Rechtecksignal mit der Eigenfrequenz (Trägerfrequenz) des Schwingkreises zugeführt wird, und einer zweiten Ansteuerschaltung S2, der das nichtinvertierte Rechtecksignal mit der Trägerfrequenz des Schwingkreises zugeführt wird, getaktet. Während die Emitter der Transistoren T3, T4 jeweils mit einem positiven Versorgungspotential VB verbunden sind, liegen die Emitter der Komplementärtransistoren T1, T2 über Gegenkopplungswiderstände R1, R2, denen jeweils eine steuerbare Stromquelle Q1, Q2 parallel geschaltet ist, an Massepotential. Die Stromquellen Q1, Q2 werden dabei durch den AM-Demodulator AM so gesteuert, daß sie den größten Teil des durch den Schwingkreis fließenden Stromes Is1, Is2 übernehmen. Der restliche Teil I1, I2, dessen Höhe vorzugsweise zwischen 1% und 5% des jeweiligen Stromes (Is1 Is2) liegt, fließt durch Widerstände R1, R2 und erzeugen dabei je Schaltungszweig T1, T4 bzw T3,T2 einen Spannungsabfall V1, V2. Zur Rückgewinnung des niederfrequenten Datensignals werden die beiden Amplitudensignale (V1,V2) als Eingangssignale für einen ebenfalls mit der Frequenz des Trägersignals gesteuerten AM-Demodulator AM benutzt. Damit erhält der AM-Demodulator AM an seinen Eingängen je Rechteckimpuls eine dem Modulationszustand des Trägersignales entsprechende Spannungsspitze. Bezogen auf den Spannungshub, den ein nichtmoduliertes Trägersignal liefert, sind diese Spannungsspitzen entweder kleiner oder größer. Um die Systemempfindlichkeit zu erhöhen, ist es dabei vorteilhaft, die Spannungsspitzen beider Schaltungszweige der H-Brücke zu dedektieren. Entsprechend der Höhe des Stromflusses in den jeweiligen Schaltungszweigen der H-Brücke schwankt das Potential an den Emittern der Transistoren T1, T2 zwischen Masse und der Versorgungsspannung VB, vermindert um die beiden Sättigungsspannungen (UCEsat) eines jeweiligen Schaltungszweiges T1, T4 bzw T3,T2. Durch die geringere Anforderung an die Spannungsfestigkeit des AM-Demodulators AM läßt sich dieser gemeinsam mit der Ansteuerschaltung für den seriellen Schwingkreis in einem IC integrieren. Ein kostenintensives Zusammenfügen verschiedener Bauteile auf einer Leiterplatte kann damit entfallen. Des Weiteren ist es durch die erfindungsgemäße Schaltungsanordnung möglich, ein PIN am IC einzusparen, da das Modulationssignal nicht mehr extern zur Verfügung gestellt werden muß.

Fig 2 zeigt eine weitere vorteilhafte Ausführungsform der erfindungsgemäßen Schaltungsanordnung. Dabei werden innerhalb beider Zweige der H-Brücke die bipolaren Transistoren durch MOS-Transistoren T1 bis T4 ersetzt. Da bei den MOS Transistoren der Spannungsabfall im durchgeschalteten Zustand kleiner als die Sättigungsspannung (UCEsat) eines Bipolar-Transistors ist, erhöht sich damit der Modulationshub des Trägersignals und die Systemempfindlichkeit. Gleichzeitig verringert sich die Verlustleistung in den Schaltungszweigen der H-Brücke. Des Weiteren lassen sich in den beiden Schaltungszweigen die steuerbaren Stromquellen Q1, Q2 durch MOS Transistoren T5, T6 ersetzen und damit die Schaltungsanordnung weiter vereinfachen. Die Dimensionierung dieser Transistoren T5, T6 muß dabei so gewählt werden, daß diese im durchgeschalteten Zustand den größten Teil Is1 - △I1 bzw Is1 - △I2, des durch den Schwingkreis fließenden Stromes Is1, Is2, übernehmen. Vorzugsweise liegt der Anteil des Stromes Is1 - △I1, Is1 - △I2 im Bereich zwischen 95% und 99% bezogen auf die durch die jeweiligen Schaltungszweige fließenden Ströme Is1, Is2. Entsprechend liegt die Größe der durch die Widerstände R1, R2 fließenden Ströme △I1, △I2 im Bereich zwischen 5% und 1% der Ströme Is1, Is2.

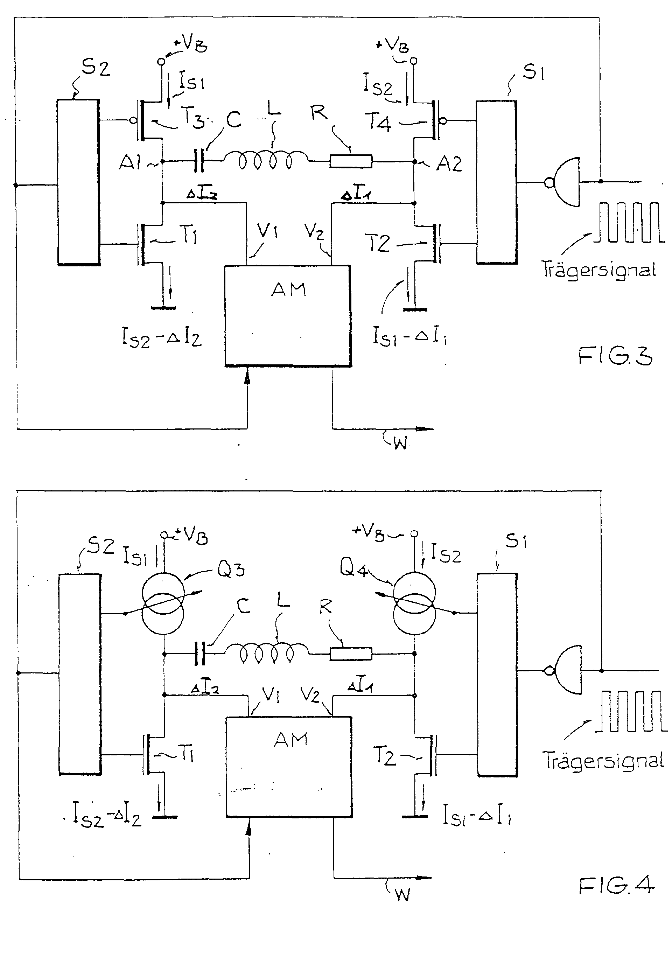

In Fig.3 ist eine weitere vorteilhafte Ausführungsform der erfindungsgemäßen Schaltungsanordnung dargestellt. Durch den Abgriff des Modulationssignals an den beiden Ausgängen A1, A2 der beiden Schaltungszweige der H-Brücke lassen sich sowohl die beiden Gegenkopplungswiderstände R1, R2 als auch die steuerbaren Stromquellen Q1, Q2 einsparen. Voraussetzung dafür ist, daß das Dimensionierungsverhältnis der Transistoren T2/T4 bzw T2/T3 eines jeden Schaltungszweiges der H-Brücke kleiner 1 gewählt wird. Für eine optimale Systemempfindlichkeit ist es wichtig, daß das Dimensionierungsverhältnis der Transistoren T2/T4, T2/T3 der beiden Schaltungszweige gleich groß ist. Da jeweils der an Massepotential liegende Transistor eines Schaltungszweiges der H-Brücke T1, T2, den im Schwingkreis fließenden Strom nur bis zu dem Wert Is2 - △I2 übernehmen kann, ändert der jeweilige Transistor T1, T2 seine Betriebsart von einem niederohmigen Schalter zu einer hochohmigen Stromquelle. Die resultierende Spannungsamplitude V1, V2 wird als Eingangssignal dem AM-Demodulator AM zugeführt. Vorzugsweise liegt der von den Transistoren T1, T2 maximal übernommene Strom im Bereich zwischen 95% und 99% des Stromes, der durch die Transistoren T3, T4 fließt. Um das Dimensionierungsverhältnis genau einstellen zu können, kann es dabei vorteilhaft sein, die Transistoren T1, T2 aus mehreren parallelgeschalteten Transistoren aufzubauen.

Fig. 4 zeigt eine weitere vorteilhafte Ausführungsform der erfindungsgemäßen Schaltungsanordnung. Hierbei wurden die Transistoren T3, T4, die an der Versorgungsspannung liegen, durch steuerbare Stromquellen Q3, Q4 realisiert. Damit lassen sich eventuelle Fertigungsstreuungen bei der Dimensionierung der Transistoren T1, T2 kompensieren. Gleichzeitig läßt sich die Symmetrie, d.h. die Gleichheit des Stromes Is1 = Is2 zwischen den beiden Schaltungszweige der H-Brücke T2/T4, T2/T3 durch das Nachregeln der einzelnen Stromquellen Q3, Q4 leicht einstellen.

In den verschiedenen Ausführungsformen der erfindungsgemäßen Schaltungsanordnung können im Falle von den MOS Transistoren sowohl P- als auch N- Kanal Transistoren, im Falle von bipolar Transistoren sowohl PNP- als auch NPN Transistoren, verwendet werden, ohne daß eine neue, von der Erfindung nicht umfaßte Schaltungsanordnung, entstünde.

## Patentansprüche

1. Schaltungsanordnung für die kontaktlose Datenübertragung zwischen einem Transponder und einer Basisseinheit zur Gewinnung eines niederfrequenten Signals, das mittels AM-Modulation auf ein Trägersignal aufmoduliert wurde,
• bestehend aus einem seriellen Schwingkreis (L, C, R), der von Transistoren (T1 - T4), die in Form von zwei Schaltungszweigen (T2, T3 und T1, T4) als H-Brücke verschaltet sind, erregt wird, wobei
• die beiden Schaltungszweige (T2, T3 und T1, T4) der H-Brücke von jeweils einer Ansteuerschaltung (S1, S2) gesteuert werden,
• und die H-Brücke mit einer Versorgungsspannungsquelle (VB) verbunden ist, und
• jeweils ein Widerstand (R1, R2) in Serie mit einem Schaltungszweig (T2, T3 und T1, T4) der H-Brücke geschaltet ist,
• **dadurch gekennzeichnet, daß**
• die erste Ansteuerschaltung (S2) für den ersten Schaltungszweig (T2, T3) der H-Brücke mit dem Trägersignal getaktet wird,
• die zweite Ansteuerschaltung (S1) für den zweiten Schaltungszweig (T1, T4) der H-Brücke mit dem invertierten Trägersignal getaktet wird,
• mindestens eine steuerbare Stromquelle (Q1, Q2) parallel zu mindestens einem Widerstand (R1, R2) geschaltet ist, und
• der Widerstand (R1, R2) mit dem A Demodulator (AM) verbunden ist, der seinerseits mit dem Trägersignal getaktet wird.

2. Schaltungsanordnung nach Anspruch 1, **dadurch gekennzeichnet, daß** mindestens eine der steuerbaren Stromquellen (Q1, Q2) durch einen Transistor (T5, T6) ersetzt wird.

3. Schaltungsanordnung für die kontaktlose Datenübertragung zwischen einem Transponder und einer Basisseinheit zur Gewinnung eines niederfrequenten Signals, das mittels AM-Modulation auf ein Trägersignal aufmoduliert wurde,
• bestehend aus einem seriellen Schwingkreis (L, C, R), der von Transistoren (T1 - T4), die in Form von zwei Schaltungszweigen (T2, T3 und T1, T4) als H-Brücke verschaltet sind, erregt wird, wobei
• die beiden Schaltungszweige (T2, T3 und T1, T4) der H-Brücke von jeweils einer Ansteuerschaltung (S1, S2) gesteuert werden,
• und die H-Brücke mit einer Versorgungsspannungsquelle (VB) verbunden ist, und
• **dadurch gekennzeichnet, daß**
• die erste Ansteuerschaltung (S2) für den ersten Schaltungszweig (T2, T3) der H-Brücke mit dem Trägersignal getaktet wird,
• und die zweite Ansteuerschaltung (S1) für den zweiten Schaltungszweig (T1, T4) der H-Brücke mit dem invertierten Trägersignal getaktet wird, und
• mindestens einer der Anschlüsse (A1, A2) des seriellen Schwingkreises mit dem AM Demodulator (AM) verbunden ist, der seinerseits mit dem Trägersignal getaktet wird.

4. Schaltungsanordnung nach einem der Ansprüche 1, oder 3, dadurch **gekennzeichnet, daß** mindestens einer, der mit dem Massepotential verbundenen Transistoren (T1, T2), durch mehrere Transistoren ersetzt werden, die zueinander parallel geschaltet sind.

5. Schaltungsanordnung nach Anspruch 3, **dadurch gekennzeichnet, daß** mindestens einer, der Transistoren (T3, T4) der H-Brücke, durch eine steuerbare Stromquelle (Q3 oder Q4) ersetzt wird.

6. Schaltungsanordnung nach einen der vorangegangen Ansprüchen, **dadurch gekennzeichnet, daß** bei positiver Versorgungsspannung (V8) mindestens einer der mit dieser Versorgungsspannung verbundenen Transistoren (T1, T2) der H-Brücke ein PNP oder P-Kanal Transistor ist.
